# EUROPEAN PATENT APPLICATION

(11) **EP 4 815 543 A1**
(43) Date of publication of application: **30.09.2026**
(21) Application number: 24910465.4
(22) Date of filing: 25.11.2024
(51) Int. Cl.: H04W 24/02

(54) **METHOD FOR NEIGHBORING CELL MANAGEMENT AND RELATED APPARATUS**

(30) Priority: 29.12.2023 CN 202311867912
(71) Applicant: Huawei Technologies Co., Ltd., Shenzhen, Guangdong 518129 (CN)
(72) Inventor: WU, Yedan, Shenzhen, Guangdong 518129 (CN); LI, Yexing, Shenzhen, Guangdong 518129 (CN); YU, Yijun, Shenzhen, Guangdong 518129 (CN)
(74) Representative: Grünecker Patent- und Rechtsanwälte PartG mbB
(86) International application number: PCT/CN2024/134374
(87) International publication number: WO 2025/139531

(57) **Abstract**

This application provides a method for neighbour cell management and a related apparatus, to help perform neighbour cell management more efficiently. The method includes: A first communication apparatus determines a neighbour cell list of a first cell, where the neighbour cell list includes one or more second cells; the first communication apparatus determines a valid duration corresponding to each second cell in the neighbour cell list, where each second cell is a neighbour cell of the first cell within the corresponding valid duration; the first communication apparatus sends neighbour cell information to a second communication apparatus, where the neighbour cell information indicates each second cell in the neighbour cell list of the first cell and the valid duration corresponding to each second cell; and the second communication apparatus performs neighbour cell management based on the valid duration corresponding to each second cell.

## Description

This application claims priority to Chinese Patent Application No. 202311867912.4, filed with the China National Intellectual Property Administration on December 29, 2023, and entitled "METHOD FOR NEIGHBOUR CELL MANAGEMENT AND RELATED APPARATUS", which is incorporated herein by reference in its entirety.

### TECHNICAL FIELD

This application relates to the communication field, and in particular, to a method for neighbour cell management and a related apparatus.

### BACKGROUND

Neighbour cell management is a critical technology in mobile networks, as it is related to cell measurement and cell handover of a terminal and, in turn, affects user experience at the terminal. During initial network deployment, a network management system/equipment management system configures an initial neighbour cell list for a base station, where the neighbour cell list includes information about at least one neighbour cell for each cell of the base station. Currently, each cell maintains a neighbour cell list having a fixed length, and the list contains information about a maximum of 1,024 neighbour cells.

Compared with a cell in a terrestrial network (terrestrial network, TN) (referred to as a TN cell), a cell in a non-terrestrial network (non-terrestrial network, NTN) (referred to as an NTN cell) has a larger coverage range and a larger quantity of neighbour cells (typically far exceeding 1,024 neighbour cells). In addition, during satellite flight, the neighbour cells of the NTN cell change with time. Consequently, the current fixed neighbour cell list is no longer applicable to the NTN cell.

In view of this, there is an urgent need for a method that can provide neighbour cell management more efficiently.

### SUMMARY

This application provides a method for neighbour cell management and a related apparatus, to help perform neighbour cell management more efficiently.

According to a first aspect, a method for neighbour cell management is provided. The method may be performed by a first communication apparatus. The first communication apparatus may be a network management system (network management system, NMS) or an equipment management system (equipment management system, EMS), or may be a component (for example, a processor, a chip, or a chip system) configured in an NMS or an EMS, or may be a logical module or software that can implement all or some functions of the first communication apparatus. This is not limited in this application. The equipment management system may also be referred to as an element management system (element management system, EMS). This is not limited in this application.

The method includes: determining a neighbour cell list of a first cell, where the neighbour cell list includes one or more second cells; determining a valid duration corresponding to each second cell in the neighbour cell list, where each second cell is a neighbour cell of the first cell within the corresponding valid duration; and sending neighbour cell information, where the neighbour cell information indicates each second cell in the neighbour cell list of the first cell and the valid duration corresponding to each second cell.

In this application, the first cell may be an NTN cell. To adapt to a feature that the NTN cell has a large quantity of neighbour cells and the NTN cell moves with time, the first communication apparatus configures a corresponding valid duration for a candidate neighbour cell that the NTN cell may pass through. The candidate neighbour cell includes one or more second cells, and each second cell is a neighbour cell of the first cell within the corresponding valid duration. When current time is not within a specific valid duration, it means that the valid duration is invalid, or is not activated yet, and a second cell corresponding to the valid duration is not a neighbour cell of the first cell. In this manner, the neighbour cell list can be dynamically adjusted based on the valid duration, to help perform neighbour cell management more efficiently.

With reference to the first aspect, in some implementations of the first aspect, the neighbour cell information indicates a valid duration, and the valid duration corresponds to the one or more second cells.

In this application, the first cell has the neighbour cell list, and the valid duration indicated by the neighbour cell information is a valid duration of the neighbour cell list, that is, all second cells in the neighbour cell list correspond to the valid duration. This indication manner is more flexible and convenient.

When the first cell has a plurality of neighbour cell lists, each neighbour cell list corresponds to one valid duration, and a quantity of valid durations is the same as a quantity of neighbour cell lists.

With reference to the first aspect, in some implementations of the first aspect, the neighbour cell information indicates one or more valid durations, and the one or more valid durations are in one-to-one correspondence with the one or more second cells.

In this application, the first cell has the neighbour cell list, and the one or more valid durations indicated by the neighbour cell information are one or more valid durations corresponding to the one or more second cells in the neighbour cell list. In other words, a valid duration is indicated for each second cell in the neighbour cell list, and a quantity of valid durations indicated by the neighbour cell information is the same as a quantity of second cells in the neighbour cell list.

When the first cell has a plurality of neighbour cell lists, the second cell in each neighbour cell list corresponds to one valid duration, and the quantity of valid durations indicated by the neighbour cell information is the same as a quantity of all second cells in the plurality of neighbour cell lists.

With reference to the first aspect, in some implementations of the first aspect, the determining the valid duration corresponding to each second cell in the neighbour cell list includes: determining, based on one or more of the following information, the valid duration corresponding to each second cell in the neighbour cell list: ephemeris information, digital twin information, artificial intelligence, or a large-scale model.

With reference to the first aspect, in some implementations of the first aspect, the method further includes: sending indication information, where the indication information indicates whether to perform neighbour cell management based on the valid duration. In this way, a manner of neighbour cell management is more flexible.

According to a second aspect, a method for neighbour cell management is provided. The method may be performed by a second communication apparatus. The second communication apparatus may be a radio access network (radio access network, RAN) node, or may be a component (for example, a processor, a chip, or a chip system) configured in a RAN node, or may be a logical module or software that can implement all or some functions of the second communication apparatus. This is not limited in this application.

The method includes: receiving neighbour cell information, where the neighbour cell information indicates each second cell in a neighbour cell list of a first cell and a valid duration corresponding to each second cell, and each second cell is a neighbour cell of the first cell within the corresponding valid duration; and performing neighbour cell management based on the valid duration corresponding to each second cell.

In this application, the first cell may be an NTN cell. To adapt to a feature that the NTN cell has a large quantity of neighbour cells and the NTN cell moves with time, the second communication apparatus may obtain the valid duration corresponding to each second cell, and each second cell is a neighbour cell of the first cell within the corresponding valid duration. After current time exceeds an end time point of a specific valid duration, it means that the valid duration is invalid, and a second cell corresponding to the valid duration is no longer a neighbour cell of the first cell. In this manner, the neighbour cell list can be dynamically adjusted based on the valid duration, to help perform neighbour cell management more efficiently.

With reference to the second aspect, in some implementations of the second aspect, the neighbour cell information indicates a valid duration, and the valid duration corresponds to the one or more second cells.

With reference to the second aspect, in some implementations of the second aspect, the neighbour cell information indicates one or more valid durations, and the one or more valid durations are in one-to-one correspondence with the one or more second cells.

With reference to the second aspect, in some implementations of the second aspect, the method further includes: receiving indication information, where the indication information indicates whether to perform neighbour cell management based on the valid duration. The performing neighbour cell management based on the valid duration corresponding to each second cell includes: in a case in which the indication information indicates to perform neighbour cell management based on the valid duration, performing neighbour cell management based on the valid duration corresponding to each second cell. In this way, a manner of neighbour cell management is more flexible.

According to a third aspect, a method for neighbour cell management is provided. The method may be performed by a second communication apparatus. The second communication apparatus may be an EMS node or a RAN node, or may be a component (for example, a processor, a chip, or a chip system) configured in an EMS node or a RAN node, or may be a logical module or software that can implement all or some functions of the second communication apparatus. This is not limited in this application.

The method includes: receiving neighbour cell information, where the neighbour cell information indicates each second cell in a neighbour cell list of a first cell and a valid duration corresponding to each second cell, and each second cell is a neighbour cell of the first cell within the corresponding valid duration; and determining, based on the neighbour cell information, the valid duration corresponding to each second cell.

According to a fourth aspect, a method for neighbour cell management is provided. The method may be performed by a third communication apparatus. The third communication apparatus may be an EMS, or may be a component (for example, a processor, a chip, or a chip system) configured in an EMS, or may be a logical module or software that can implement all or some functions of the third communication apparatus. This is not limited in this application.

The method includes: receiving neighbour cell information, where the neighbour cell information indicates each second cell in a neighbour cell list of a first cell and a valid duration corresponding to each second cell, and each second cell is a neighbour cell of the first cell within the corresponding valid duration; and sending the neighbour cell information.

The third communication apparatus may receive neighbour cell information from a first communication apparatus (when the first communication apparatus is an NMS), and then the third communication apparatus may send the neighbour cell information to a second communication apparatus (when the second communication apparatus is a RAN node).

According to a fifth aspect, a communication apparatus is provided, configured to perform the method according to any possible implementation in any one of the foregoing aspects. Specifically, the apparatus includes a module configured to perform the method according to any possible implementation in any one of the foregoing aspects.

In a design, the apparatus may include a module in one-to-one correspondence with a method/operation/step/action described in any one of the foregoing aspects. The module may be implemented by a hardware circuit, software, or a combination of a hardware circuit and software.

In another design, the apparatus is a communication chip. The communication chip may include an input circuit or an interface configured to send information or data, and an output circuit or an interface configured to receive information or data.

In another design, the apparatus is an NMS, an EMS, or a RAN node. The NMS, the EMS, or the RAN node may include a transmitter configured to send information or data, and a receiver configured to receive information or data.

In another design, the apparatus is configured to perform the method according to any possible implementation in any one of the foregoing aspects, and the apparatus may be configured in an NMS, an EMS, or a RAN node.

According to a sixth aspect, a communication apparatus is provided, and includes a processor. The processor is configured to invoke a computer program from a memory and run the computer program, to cause the apparatus to perform the method according to any possible implementation in any one of the foregoing aspects.

Optionally, the apparatus further includes the memory, and the memory may be configured to store instructions and data. The memory is coupled to the processor. When the processor executes the instructions stored in the memory, the methods described in the foregoing aspects may be implemented.

Optionally, the apparatus further includes a transmitter (transmitter machine) and a receiver (receiver machine). The transmitter and the receiver may be separately disposed, or may be integrated together and referred to as a transceiver (transceiver machine).

According to a seventh aspect, a computer program product is provided. The computer program product includes a computer program (which may also be referred to as code or instructions). When the computer program is run, a computer is caused to perform the method according to any possible implementation in any one of the foregoing aspects.

According to an eighth aspect, a computer-readable storage medium is provided. The computer-readable storage medium stores a computer program (which may also be referred to as code or instructions). When the computer program is executed by a computer, the computer is caused to perform the method according to any possible implementation in any one of the foregoing aspects.

According to a ninth aspect, this application provides a chip system. The chip system includes at least one processor configured to support implementation of a function according to any possible implementation in any one of the foregoing aspects, for example, receiving or processing data in the foregoing methods.

In a possible design, the chip system further includes a memory. The memory is configured to store program instructions and data, and the memory is located inside or outside the processor.

Optionally, the chip system may include a chip, or may include a chip and another discrete component.

### BRIEF DESCRIPTION OF DRAWINGS

FIG. 1 is a schematic flowchart of a method for neighbour cell management;
FIG. 2 is a diagram of a coverage range of an NTN cell;
FIG. 3 is a diagram of movement of an NTN cell;
FIG. 4A is a diagram of a cross-domain architecture to which an embodiment of this application is applicable;
FIG. 4B is a diagram of a single-domain architecture to which an embodiment of this application is applicable;
FIG. 5 is a diagram of an architecture of a communication system to which an embodiment of this application is applicable;
FIG. 6A to FIG. 6D are diagrams of architectures of satellite communication to which embodiments of this application are applicable;
FIG. 7 to FIG. 10 are schematic flowcharts of methods for neighbour cell management according to embodiments of this application; and
FIG. 11 to FIG. 13 are block diagrams of communication apparatuses according to embodiments of this application.

### DESCRIPTION OF EMBODIMENTS

The following describes technical solutions of this application with reference to the accompanying drawings.

Before a method for neighbour cell management and a related apparatus that are provided in embodiments of this application are described, the following descriptions are first provided.

First, in embodiments shown below, the terms and English abbreviations such as NTN and neighbour cell list are examples provided for ease of description, and shall not constitute any limitation on this application. This application does not exclude a possibility of defining another term that can implement a same or similar function in an existing or a future protocol.

Second, the terms "first", "second", and various numbers in the following embodiments are merely used for differentiation for ease of description, but are not intended to limit the scope of embodiments of this application.

Third, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

Fourth, "sending" and "receiving" in this application indicate a signal transmission direction. For example, "sending a neighbour cell message to a second communication apparatus" may be understood as that a target end of the neighbour cell message is the second communication apparatus, and may include direct sending through an air interface, or may include indirect sending through an air interface by using another unit or module. "Receiving a neighbour cell message from a first communication apparatus" may be understood as that a source end of the neighbour cell message is the first communication apparatus, and may include direct receiving from the first communication apparatus through an air interface, or may include indirect receiving from the first communication apparatus through an air interface by using another unit or module. "Sending" may alternatively be understood as "outputting" of a chip interface, and "receiving" may alternatively be understood as "inputting" of the chip interface.

In other words, sending and receiving may be performed between devices, for example, between the first communication apparatus and the second communication apparatus; or may be performed inside a device, for example, sending and receiving between components, modules, chips, software modules, or hardware modules in the device through a bus, a cable, or an interface.

The following describes related technologies and concepts in this application.

### 1. Domain

A domain indicates a physical or logical entity including network devices within a same management scope. For example, the domain may be a RAN management domain (management domain, MD), a core network (core network, CN) MD, a transmission network (transmission network, TN) MD, or an end-to-end (end-to-end, E2E) MD.

The RAN MD may include a base station, a cell, a network device in a wireless equipment management system, and the like.

The CN MD may include a core network element, a network device in a core network equipment management system, and the like. The core network element is, for example, a session management function (session management function, SMF), a network data analysis function (network data analysis function, NWDAF), or an access and mobility management function (access and mobility management function, AMF).

The TN MD may include a switch, a router, a network device in a transmission network equipment management system, and the like.

The E2E MD includes network devices in the RAN MD, the CN MD, the TN MD, an NMS, and the like.

The foregoing wireless equipment management system, the core network equipment management system, and the transmission network equipment management system are EMSs in a plurality of different domains.

### 2. NTN communication

NTN communication has features such as a large coverage range and flexible networking, and can achieve seamless coverage of a global network. An NTN network is a supplement to a current terrestrial network, and may also be considered as an independent communication system that provides users with global high-speed network access. The NTN communication includes networking performed by using devices such as an unmanned aircraft system (unmanned aircraft system, UAS), a high altitude platform (high altitude platform, HAP), and a satellite, to provide terminals with services such as data transmission and voice communication. An unmanned aircraft system platform (including the HAP) is generally 8 km to 50 km above the ground. A beam coverage range of the unmanned aircraft system platform is 5 km to 200 km.

Based on orbital altitudes of the satellite, a satellite communication system may be classified into the following three types: a geostationary earth orbit (geostationary earth orbit, GEO) satellite communication system (also referred to as a synchronous orbit satellite system), a medium earth orbit (medium earth orbit, MEO) satellite communication system, and a low earth orbit (low earth orbit, LEO) satellite communication system.

An orbital altitude of a GEO satellite is 35,786 km. A main advantage is that the GEO satellite can remain stationary relative to the ground and provide a large coverage area. A beam coverage range of the GEO satellite is 200 km to 3,500 km.

An orbital altitude of an MEO satellite ranges from 7,000 km to 25,000 km. An advantage is that global coverage can be implemented by using a small quantity of satellites. A beam coverage range of the MEO satellite is 100 km to 1,000 km. However, the orbital altitude of the MEO satellite is higher than that of an LEO satellite, and a communication transmission delay of the MEO satellite is still greater than that of the LEO satellite. Based on advantages and disadvantages of MEO satellite communication, the MEO satellite is mainly used for positioning and navigation.

The orbital altitude of the LEO satellite ranges from 300 km to 1,500 km. A beam coverage range of the LEO satellite is 100 km to 1,000 km. The 3rd generation partnership project (3rd generation partnership project, 3GPP) discusses two typical scenarios: 600 km and 1,200 km. The orbital altitude of the LEO satellite is lower than those of the MEO satellite and the GEO satellite, and has advantages of a short data transmission delay, a small transmission loss, and low launch costs. Therefore, LEO satellite communication has gained more attention in recent years.

### 3. Neighbour cell management

Neighbour cell management is a critical technology in mobile networks, as it is related to measurement and handover of a terminal and, in turn affects user experience at the terminal. During initial network deployment, a network management system/equipment management system may configure an initial neighbour cell list for a base station. To manage the base station more efficiently, an automatic neighbor relation (automatic neighbor relation, ANR) is introduced, and the base station may automatically manage a neighbour cell based on the ANR. Specifically, the base station identifies the neighbour cell and records information related to the neighbour cell, to perform measurement and handover decision more efficiently. When an ANR function is enabled, the base station maintains a neighbour cell list for each cell of the base station. An initial value of the neighbour cell list is configured by operations, administration, and maintenance (operations, administration, and maintenance, OAM).

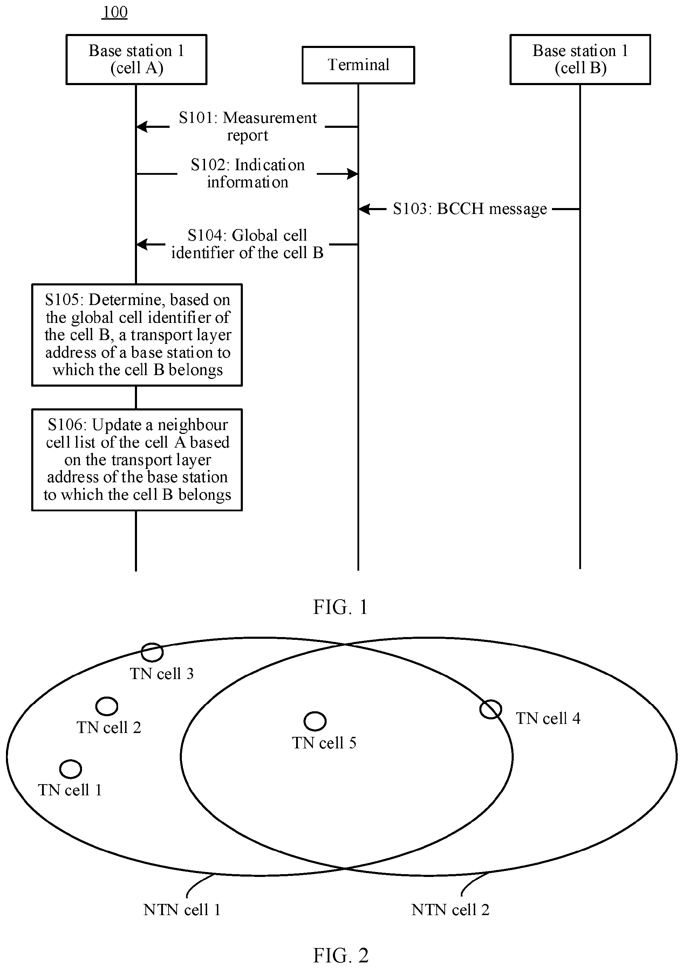

The ANR function includes an intra-system ANR function and an inter-system ANR function. The network management system/equipment management system controls, by sending "intrasystemANRManagementSwitch" (intra-system ANR management switch) in a configuration information element, whether the base station can enable the intra-system ANR function; and controls, by sending "intersystemANRManagementSwitch" (inter-system ANR management switch), whether the base station can enable the inter-system ANR function. If the ANR management switch is "TRUE", it indicates that the base station can add or delete a neighbour cell in the neighbour cell list. If the ANR management switch is "FALSE", it indicates that the base station cannot add or delete a neighbour cell in the neighbour cell list. With reference to FIG. 1, the following describes a procedure in which a base station performs neighbour cell management based on an ANR.

FIG. 1 is a schematic flowchart of a method 100 for neighbour cell management. The method 100 is described by using an example in which a cell of a base station 1 includes a cell A, and a neighbour cell of the cell A is a cell B (a cell of a base station 2). The method 100 includes S101 to S104, and specific steps are as follows:
S101: A terminal sends a measurement report to the base station 1. Correspondingly, the base station 1 receives the measurement report.

In this step, the measurement report carries a physical cell identifier (physical cell identifier, Phy-CID, or PCI) of the cell B and signal quality of the cell B. After receiving the measurement report, the base station 1 finds that the physical cell identifier of the cell B is an unknown physical cell identifier, that is, the cell B is an unknown neighbour cell. Then, the base station may perform S102 to obtain information related to the cell B.

S102: The base station 1 sends indication information to the terminal, where the indication information indicates the terminal to read a system message of the cell B. Correspondingly, the terminal receives the indication information.

S103: The terminal receives a broadcast control channel (broadcast control channel, BCCH) message of the base station 2.

In this step, information carried in the BCCH message includes but is not limited to: a global cell identifier (global cell identifier, Global-CID) of the cell B, tracking area code, access network area code, public terrestrial network code, and a frequency band.

S104: The terminal sends the global cell identifier of the cell B to the base station 1. Correspondingly, the base station 1 receives the global cell identifier of the cell B.

S105: The base station 1 determines, based on the global cell identifier of the cell B, a transport layer address of a base station (that is, the base station 2) to which the cell B belongs.

S106: The base station 1 updates a neighbour cell list of the cell A based on the transport layer address of the base station to which the cell B belongs.

Optionally, the base station 1 may establish an Xn interface with the base station 2. In addition, when the base station 1 establishes a connection with the base station 2, respective serving cell information and neighbour cell information may be exchanged on the interface, and the neighbour cell information includes information about a maximum of 1,024 neighbour cells.

For a TN cell, a quantity of neighbour cells of the TN cell is basically fixed as a base station location is fixed. However, for an NTN cell, a beam coverage range of the NTN cell is 100 km to 3,500 km, while a beam coverage range of a common TN cell is 100 m to 3,000 m. Therefore, it can be predicted that, a quantity of neighbour cells of the NTN cell increases exponentially compared with that of the TN cell. For example, the quantity of neighbour cells of the NTN cell is 1,000 times the quantity of neighbour cells of the TN cell.

Refer to a diagram of coverage ranges of NTN cells as shown in FIG. 2, coverage ranges of an NTN cell 1 and an NTN cell 2 is very large, and the NTN cell 1 and the NTN cell 2 have many TN neighbour cells and NTN neighbour cells. As shown in FIG. 2, neighbour cells of the NTN cell 1 include the NTN cell 2, a TN cell 1, a TN cell 2, a TN cell 3, a TN cell 4, and a TN cell 5; and neighbour cells of the NTN cell 2 include the NTN cell 1, the TN cell 1, the TN cell 2, the TN cell 3, the TN cell 4, and the TN cell 5.

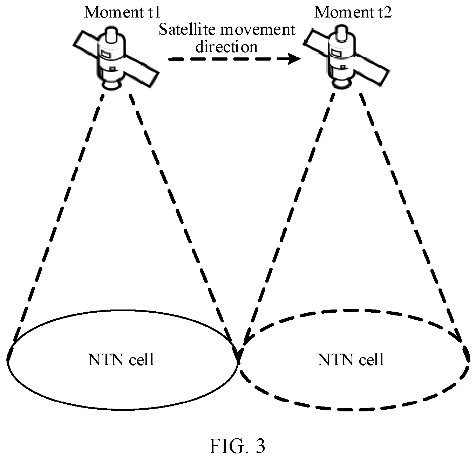

Further, refer to a diagram of movement of an NTN cell shown in FIG. 3, when a satellite is in a moving state, a coverage range of the NTN cell changes with flight of the satellite. Therefore, a same NTN cell passes through a plurality of neighbour cells, which also causes a rapid increase in a quantity of neighbour cells of the NTN cell.

The quantity of neighbour cells of the NTN cell is large (generally far exceeding 1,024 neighbour cells), and a current neighbour cell list includes a maximum of 1,024 neighbour cells. Therefore, when the quantity of neighbour cells of the NTN cell exceeds 1,024, a base station may discard some neighbour cell information, or some neighbour cells in the neighbour cell list are already invalid neighbour cells, that is, are no longer neighbour cells of the NTN cell. This causes deterioration of handover performance.

It can be known from the foregoing descriptions that the NTN cell has many neighbour cells and moves with time. Therefore, the current fixed neighbour cell list is no longer applicable to the NTN cell. Based on this, this application provides a method for neighbour cell management. In the method, a neighbour cell of an NTN cell can be dynamically updated in a neighbour cell list of a limited length, which helps a base station perform neighbour cell management more efficiently.

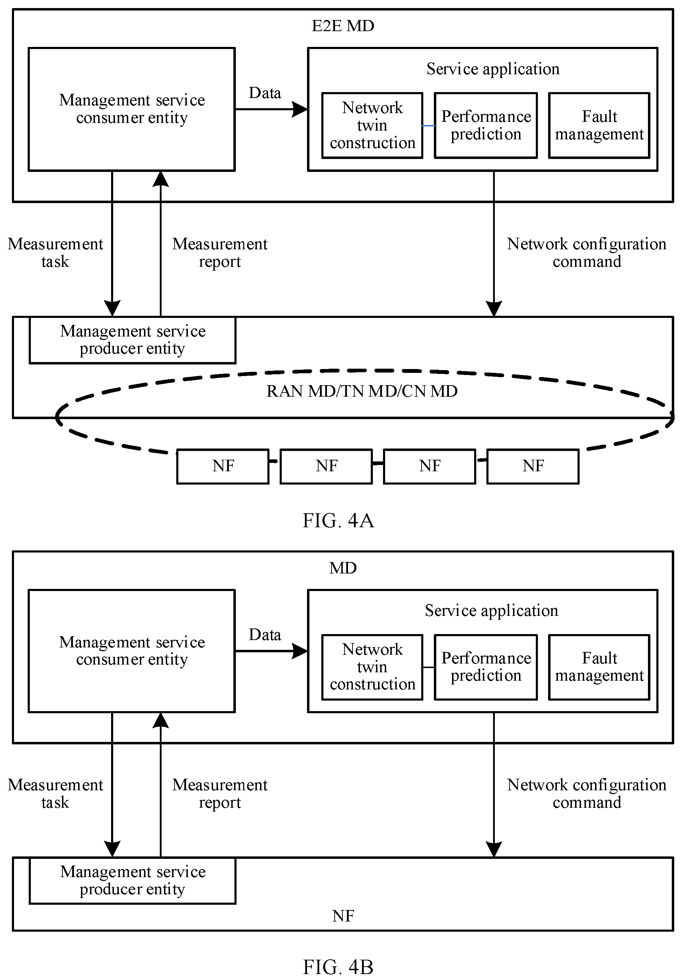

FIG. 4A is a diagram of a cross-domain architecture to which an embodiment of this application is applicable. The architecture shown in FIG. 4A includes an E2E MD, a RAN MD, a TN MD and a CN MD. The E2E MD may correspond to an NMS or an operation support system (operation support system, OSS), and the RAN MD, the TN MD, and the CN MD may correspond to different EMSs. The NMS may manage EMSs corresponding to a plurality of different domains, that is, implement cross-domain management. A plurality of network functions (network function, NF) in FIG. 4A may be a RAN node (for example, a base station), a transmission network device (for example, a switch or a router), and a core network element (for example, an SMF, an AMF, or an NWDAF).

A management service consumer (management service consumer, MnS consumer) is a management service consumer logical entity or physical entity deployed in the NMS, is an invoker of a management service, and is responsible for delivering a measurement task and obtaining a measurement report in this solution.

A management service producer (management service producer, MnS producer) is a management service producer logical entity or physical entity deployed in the EMS, is a provider of a management service, and is responsible for creating a measurement task and generating measurement data in this solution.

A service application is an application entity of data. The service application monitors a network status or generates a network configuration command by processing and analyzing the data. For example, an application service may be network twin construction (or referred to as digital twin construction), performance prediction, fault prediction, or the like; and the network configuration command may be adjusting an antenna tilt angle of a base station, disconnecting an algorithm switch of a base station, or the like.

FIG. 4B is a diagram of a single-domain architecture to which an embodiment of this application is applicable. The architecture shown in FIG. 4B includes an MD and an NF. The MD may be an EMS, and the NF may be, for example, a base station, a transmission network device (for example, a switch or a router), or a core network device (for example, an SMF, an AMF, or an NWDAF).

The MD includes a management service consumer and a service application, and the NF includes a management service producer. For specific descriptions of the management service consumer, the service application, and the management service producer, refer to the foregoing descriptions for FIG. 4B. Details are not described herein again.

The foregoing NMS may be considered as a logical entity (or may be referred to as a software module) deployed by an operator on a network side. The NMS may be deployed on a core network, or may be deployed independently of the core network. The NMS may manage EMSs in a plurality of regions on the network side.

For example, the NMS manages at least one EMS corresponding to a RAN DM, and each of the at least one EMS manages at least one RAN node. The EMS may be an apparatus independent of a RAN, or may be a part of the RAN. One EMS may manage a plurality of RAN nodes in the RAN. The RAN node sometimes may also be referred to as an access network device, a RAN entity, an access node, or the like, and forms a part of a communication system, to help a terminal implement wireless access.

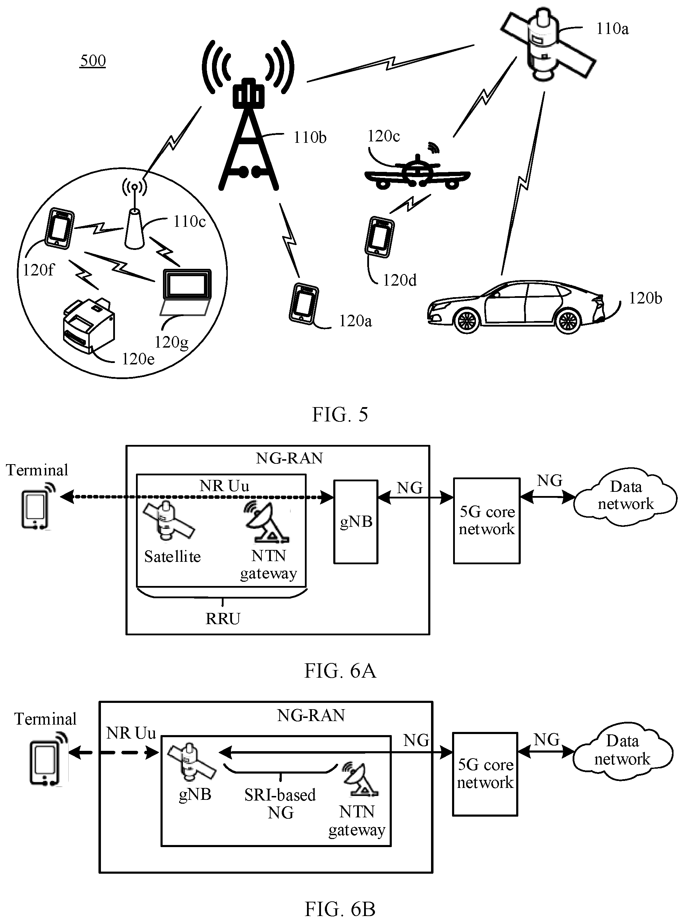

FIG. 5 is a diagram of an architecture of a communication system 500 to which an embodiment of this application is applicable. As shown in FIG. 5, the communication system 500 may include at least one RAN node (for example, 110a, 110b, and 110c in FIG. 5), and may further include at least one terminal (for example, 120a to 120g in FIG. 5). RAN nodes may be connected to each other in a wired or wireless manner. FIG. 5 is merely a diagram. The communication system may further include another network device, for example, may further include a wireless relay device and a wireless backhaul device.

In some scenarios, roles of the RAN node and the terminal are relative. For example, a network element 120c in FIG. 5 may be a helicopter or an uncrewed aerial vehicle, and may be configured as a mobile base station. For terminals 120d that access a RAN via the network element 120c, the network element 120c is a base station, but for a base station 110a, the network element 120c is a terminal. Sometimes, the RAN node and the terminal are both referred to as communication apparatuses. For example, network elements 110a, 110b, and 110c in FIG. 5 may be understood as communication apparatuses having a base station function, and network elements 120a to 120g may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation base station (next generation NodeB, gNB), or a base station in a 5^{th} generation mobile communication technology (5^{th} generation mobile communication technology, 5G), a next generation base station in a 6^{th} generation mobile communication technology (6^{th} generation mobile communication technology, 6G), a base station in a future mobile communication system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

With reference to a satellite (for example, 110a in FIG. 5) that is used as the RAN node and that is shown in FIG. 5, FIG. 6A to FIG. 6D are diagrams of architectures of satellite communication to which embodiments of this application are applicable. In FIG. 6A to FIG. 6D, a next generation radio access network (next generation radio access network, NG-RAN) is used as an example, to describe a communication architecture between a terminal, an NG-RAN, a 5G core network (core network, CN), and a data network (data network) in satellite communication. A satellite in the NG-RAN may be classified into a transparent (transparent) mode and a regenerative (regenerative) mode based on working modes. The 5G core network may also be referred to as a new radio (new radio, NR) core network.

Refer to FIG. 6A. A satellite operates in a transparent mode. The satellite has a relay forwarding function, and is configured to forward a signal between a terminal and a base station (for example, a gNB in FIG. 6A). An NTN gateway has a function of the base station or some functions of the base station. The satellite uses a same NR Uu radio interface from a feeder link (a link between the NTN gateway and the satellite) to a service link (a link between the satellite and the terminal).

Refer to FIG. 6B. A satellite operates in a regenerative mode. The satellite has a data processing capability, and has a function of a base station or some functions of the base station. In this case, the satellite may be considered as the base station (for example, a gNB in FIG. 6B). A service link between a terminal and the satellite has an NR Uu radio interface, and a feeder link between an NTN gateway and the satellite is implemented via a satellite radio interface (satellite radio interface, SRI).

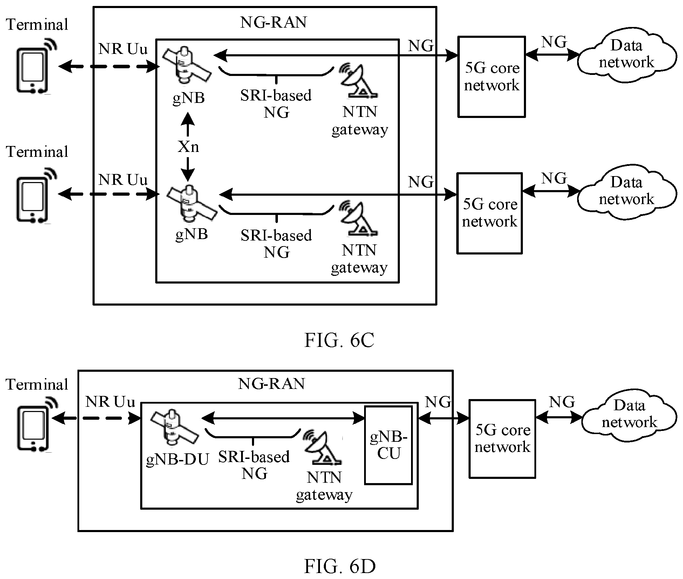

Refer to FIG. 6C. In a regenerative mode in which a satellite is used as a base station, an inter-satellite link (inter-satellite link, ISL) may be further established between satellites for communication, and a terminal served by the satellite may access a 5G core network through the ISL. Different satellites may be connected to a same 5G core network or different 5G core networks on the ground.

Refer to FIG. 6D. A satellite may be used as a part of a distributed base station, for example, as a DU (for example, a gNB-DU in FIG. 6D). A service link between the satellite and a terminal has an NR Uu radio interface. A feeder link between an NTN gateway and the satellite is implemented through an SRI, and the SRI transmits an F1 protocol.

In the foregoing descriptions of FIG. 6A to FIG. 6D, the regenerative mode of the satellite may be described as that the satellite is used as the base station, or the base station exists on the satellite. To be specific, the satellite may be used as a part of the distributed base station, or a part of the distributed base station exists on the satellite.

In addition, the satellite may further be used as an integrated access and backhaul (integrated access and backhaul, IAB) node, or used as a backhaul part between the base station and the core network. This is not limited in this application.

It can be known from the foregoing descriptions that, one NMS manages at least one EMS, one EMS manages at least one base station, and one base station may have at least one cell. In this application, the NMS may determine a candidate neighbour cell of each first cell in at least one first cell corresponding to the at least one EMS managed by the NMS, where the candidate neighbour cell of each first cell includes one or more second cells.

For ease of description, an example in which one NMS manages one EMS, one EMS manages one base station, and one base station includes one first cell is used for description in the following described embodiments.

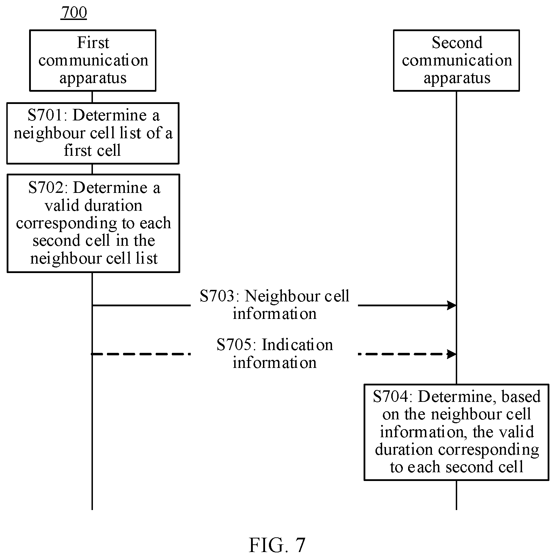

FIG. 7 is a schematic flowchart of a method 700 for neighbour cell management according to an embodiment of this application. The method 700 is performed by a first communication apparatus and a second communication apparatus through interaction. The first communication apparatus may be an NMS or an EMS, and the second communication apparatus may be an EMS or a RAN node. When the first communication apparatus is the NMS, the second communication apparatus is the EMS. When the first communication apparatus is the EMS, the second communication apparatus is the RAN node, and the RAN node is, for example, a ground base station or a satellite base station. This is not limited in this application.

S701: The first communication apparatus determines a neighbour cell list of a first cell, where the neighbour cell list includes one or more second cells.

In this step, the first communication apparatus first determines the first cell applicable to a manner of dynamically updating the neighbour cell list in this application. The first cell is a cell that meets a preset condition.

Optionally, the first cell is a cell that meets a preset network standard. For example, the network standard of the first cell is NTN, or the network standard of the first cell is NR, or the network standard of the first cell is long term evolution (long term evolution, LTE).

Optionally, the first cell is a cell that meets a preset geographical location. For example, there are a large quantity of neighbour cells around the geographical location of the first cell, and the quantity of neighbour cells meets a first threshold.

After determining the first cell, the first communication apparatus obtains neighbour cell information of the first cell, for example, information such as a physical cell identifier, frequency, and scrambling code of each neighbour cell. Further, the first communication apparatus determines the neighbour cell list of the first cell based on the neighbour cell information of the first cell, where the neighbour cell list includes the one or more second cells, and the one or more second cells are candidate neighbour cells of the first cell.

S702: The first communication apparatus determines a valid duration corresponding to each second cell in the neighbour cell list, where each second cell is a neighbour cell of the first cell within the corresponding valid duration.

For example, the first cell is an NTN cell. A coverage range of the NTN cell changes with time, and neighbour cells of a same NTN cell at different time may also change accordingly. Therefore, when a length of the neighbour cell list is fixed, corresponding second cells in the neighbour cell list may be activated based on different valid durations.

The one or more second cells may be considered as the candidate neighbour cells of the first cell. At a first moment, if the first moment is within a first valid duration, a second cell corresponding to the first valid duration may be used as a neighbour cell of the first cell. Correspondingly, as time elapses, at a second moment, if the second moment is outside the first valid duration, that is, the first valid duration is invalid, the second cell corresponding to the first valid duration is no longer the neighbour cell of the first cell, and becomes the candidate neighbour cell of the first cell again. After the first valid duration is invalid, the first communication apparatus may delete, from the neighbour cell list, configuration information related to the second cell corresponding to the first valid duration.

Optionally, the first communication apparatus deletes, from the neighbour cell list, the configuration information related to the second cell corresponding to the first valid duration, but the first communication apparatus still stores the configuration information related to the second cell corresponding to the first valid duration.

In embodiments of this application, the valid duration may be indicated in different manners.

In a possible manner, the valid duration is indicated by using a timer. For example, a time period from a start of the timer to an end of the timer is the valid duration.

In another possible manner, the valid duration is indicated by using a fixed duration. For example, the valid duration is from 7:00 to 8:00.

It should be noted that a sequence of performing S701 and S702 is not limited in this application.

In a possible implementation, the first communication apparatus first determines a neighbour cell range in which the valid duration can be used, where the neighbour cell range in which the valid duration is used includes the one or more second cells. Further, the first communication apparatus determines the neighbour cell list including the one or more second cells. Then, the first communication apparatus determines the valid duration corresponding to each second cell.

In another possible implementation, the first communication apparatus first determines a neighbour cell range in which the valid duration can be used, and then the first communication apparatus determines the valid duration corresponding to each second cell. Then, the first communication apparatus determines the neighbour cell list including the one or more second cells.

In this implementation, optionally, after determining the valid duration corresponding to each second cell, the first communication apparatus may determine the neighbour cell list based on the valid duration of each second cell.

For example, the first communication apparatus groups the one or more second cells based on valid durations, and second cells having a same valid duration may be configured in a same neighbour cell list. In this way, the first cell may have one or more neighbour cell lists, and one or more second cells in a same neighbour cell list correspond to the same valid duration.

S703: The first communication apparatus sends the neighbour cell information to the second communication apparatus, where the neighbour cell information indicates each second cell in the neighbour cell list of the first cell and the valid duration corresponding to each second cell. Correspondingly, the second communication apparatus receives the neighbour cell information.

For example, the first cell has one neighbour cell list. An indication manner of the valid duration in the neighbour cell information may include the following cases:
Case 1: The neighbour cell information indicates one valid duration, and the valid duration corresponds to the one or more second cells. Specifically, the valid duration indicated by the neighbour cell information is a valid duration of the neighbour cell list of the first cell, and the valid duration of the neighbour cell list is applicable to the one or more second cells in the neighbour cell list. In this manner, the valid duration indicates a single neighbour cell list, and this indication manner may be referred to as a single list indication manner.

For example, the neighbour cell list of the first cell includes a cell 1, a cell 2, a cell 3, and a cell 4, and the valid duration corresponding to the neighbour cell list of the first cell is from 8:00 to 9:00. In this case, valid durations of the cell 1, the cell 2, the cell 3, and the cell 4 that are included in the neighbour cell list of the first cell are all from 8:00 to 9:00.

Case 2: The neighbour cell information indicates one or more valid durations, and the one or more valid durations are in one-to-one correspondence with the one or more second cells. Specifically, the one or more valid durations indicated by the neighbour cell information are valid durations corresponding to the one or more second cells, and each second cell in the one or more second cells corresponds to one valid duration. The valid durations of the one or more second cells in the neighbour cell list of the first cell may be the same or may be different. In this manner, the valid duration indicates a single neighbour cell, and this indication manner may be referred to as a single neighbour cell indication manner. A quantity of valid durations indicated by the neighbour cell information is the same as a quantity of the one or more second cells in the neighbour cell list.

For example, the neighbour cell list of the first cell includes a cell 1, a cell 2, a cell 3, and a cell 4, and a valid duration corresponding to the cell 1 is from 7:00 to 8:00, a valid duration corresponding to the cell 2 is from 7:00 to 8:00, a valid duration corresponding to the cell 3 is from 8:00 to 9:00, and a valid duration corresponding to the cell 4 is from 8:00 to 9:00.

With reference to the single list manner described in Case 1, when the first cell has a plurality of neighbour cell lists, the plurality of neighbour cell lists include different second cells, each neighbour cell list corresponds to one valid duration, and a quantity of valid durations indicated by the neighbour cell information is the same as a quantity of neighbour cell lists.

For example, the neighbour cell list of the first cell includes a neighbour cell list A and a neighbour cell list B, where the neighbour cell list A includes a cell 1 and a cell 2, and a valid duration corresponding to the neighbour cell list A is from 7:00 to 8:00. The neighbour cell list B includes a cell 3 and a cell 4, and a valid duration corresponding to the neighbour cell list B is from 8:00 to 9:00.

Based on the foregoing descriptions of the NMS and the EMS, it can be learned that the NMS and the EMS are apparatuses on a network side, the NMS may manage at least one EMS, and the EMS may manage at least one base station. The NMS has global network information of a management region of the NMS, and may know at least one base station under each EMS managed by the NMS and a cell of each base station.

When the first communication apparatus is the NMS, and the second communication apparatus is the EMS, the NMS may send the neighbour cell list of the first cell to an EMS that manages the first cell. Then, the EMS that manages the first cell sends the neighbour cell list of the first cell to a base station to which the first cell belongs, and the base station performs neighbour cell management based on the neighbour cell list of the first cell.

When the first communication apparatus is the EMS, and the second communication apparatus is the RAN node, the EMS may send the neighbour cell list of the first cell to a RAN node to which the first cell belongs. Then, the RAN node performs neighbour cell management based on the neighbour cell list of the first cell.

S704: The second communication apparatus determines, based on the neighbour cell information, the valid duration corresponding to each second cell.

In this step, after receiving the neighbour cell information, the second communication apparatus obtains, from the neighbour cell information, the valid duration corresponding to each second cell.

In this embodiment of this application, to adapt to features that the NTN cell has a large quantity of neighbour cells and the NTN cell dynamically changes, when configuring the neighbour cell information for the first cell, the first communication apparatus configures the corresponding valid duration for each of the one or more second cells, and the neighbour cell list may be dynamically adjusted based on the valid duration. This helps perform neighbour cell management more efficiently.

In another embodiment, after S703, the second communication apparatus performs neighbour cell management based on the valid duration corresponding to each second cell. In this embodiment, the second communication apparatus is the RAN node, and the RAN node may activate, based on the valid duration corresponding to each second cell, a proper second cell as a neighbour cell of the first cell. Further, the RAN node may perform operations such as measurement decision and handover decision based on the neighbour cell of the first cell.

In an optional embodiment, that the first communication apparatus determines the valid duration corresponding to each second cell in the neighbour cell list includes: determining, based on one or more of the following items, the valid duration corresponding to each second cell in the neighbour cell list: ephemeris information, digital twin information, artificial intelligence, or big data.

For example, the first communication apparatus may determine, based on the ephemeris information, cells that the NTN cell passes through, specific time at which the NTN cell passes through the cells, and durations of passing through these cells, so that the first communication apparatus can determine one or more neighbour cells of the NTN cell and a valid duration corresponding to each neighbour cell.

For another example, the first communication apparatus simulates, based on the digital twin information, or based on a digital twin construction technology, one or more neighbour cells that the NTN cell passes through and a valid duration corresponding to each neighbour cell.

For another example, the first communication apparatus predicts a movement trajectory of the NTN cell based on the artificial intelligence or the big data, so as to determine one or more neighbour cells that the NTN cell passes through and a valid duration corresponding to each neighbour cell.

Optionally, the method 700 further includes S705: The first communication apparatus sends indication information to the second communication apparatus, where the indication information indicates whether to perform neighbour cell management based on the valid duration. The indication information indicates whether to perform neighbour cell management based on the valid duration, which may also be described as follows: The indication information indicates whether to enable a function (or a switch) of neighbour cell management that is based on the valid duration.

Further, that the second communication apparatus performs neighbour cell management based on the valid duration corresponding to each second cell specifically includes: In a case in which the indication information indicates to perform neighbour cell management based on the valid duration (which may also be described as: enable the function of neighbour cell management that is based on the valid duration), the second communication apparatus performs neighbour cell management based on the valid duration corresponding to each second cell.

In a case in which the indication information indicates not to perform neighbour cell management based on the valid duration (which may also be described as that the indication information indicates to disable the function of neighbour cell management that is based on the valid duration), a timer of the valid duration is suspended or reset, and the one or more second cells in the neighbour cell list of the first cell are permanently valid. In other words, the one or more second cells in the neighbour cell list of the first cell are fixed as the neighbour cells of the first cell during a period in which the function is disabled. When the indication information indicates to enable the function of neighbour cell management that is based on the valid duration, valid duration timing is resumed or starts from 0.

Specifically, the indication information may indicate whether to enable an intra-system or inter-system neighbour cell management function that is based on the valid duration. A system may include NR, LTE, or an NTN. The inter-system neighbour cell management may be neighbour cell management between an NR cell and an LTE cell, or neighbour cell management between an NTN cell and a TN cell. This is not limited in this application.

In a possible implementation, the first communication apparatus may determine, based on a network deployment status, whether to enable the neighbour cell management function that is based on the valid duration.

For example, when a quantity of cells near the first cell is greater than a second threshold, the neighbour cell management function based on the valid duration may be indicated to be enabled. On the contrary, when the quantity of cells near the first cell is less than the second threshold, the neighbour cell management function based on the valid duration may be indicated to be disabled.

In another possible implementation, the first communication apparatus may determine, based on the digital twin information or the ephemeris information, whether to enable, in the first cell, the neighbour cell management function that is based on the valid duration. In this manner, the first communication apparatus may predict, based on the digital twin information or the ephemeris information, a quantity of neighbour cells that the first cell passes through; and determine, based on the quantity of neighbour cells that the first cell passes through, whether to enable the neighbour cell management function that is based on the valid duration.

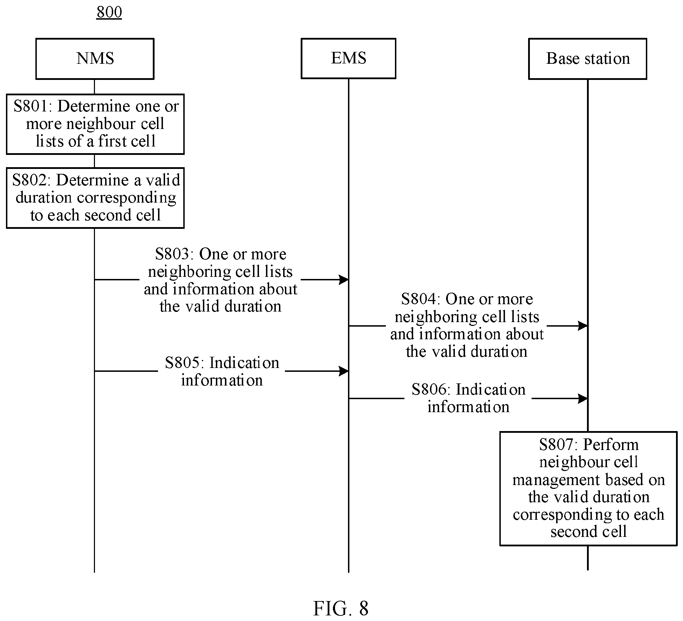

With reference to FIG. 8 to FIG. 10, the following describes a neighbour cell management process in which a first communication apparatus is an NMS and a second communication apparatus is an EMS, or a neighbour cell management process in which a first communication apparatus is an EMS and a second communication apparatus is a RAN node (an example in which the RAN node is a base station is used in the following).

FIG. 8 is a schematic flowchart of another method 800 for neighbour cell management according to an embodiment of this application. The method 800 is described by using an example in which the foregoing first communication apparatus is the NMS and the foregoing second communication apparatus is the EMS.

The method 800 includes S801 to S807, and specific steps are as follows:
S801: The NMS determines one or more neighbour cell lists of a first cell.

Each of the one or more neighbour cell lists includes one or more second cells, and the one or more second cells may be considered as candidate neighbour cells of the first cell.

S802: The NMS determines a valid duration corresponding to each second cell, where each second cell is a neighbour cell of the first cell within the corresponding valid duration.

For descriptions of S801 and S802, refer to the foregoing descriptions of S701 and S702. Details are not described herein again.

S803: The NMS sends the one or more neighbour cell lists and information about the valid duration to the EMS. Correspondingly, the EMS receives the one or more neighbour cell lists and the information about the valid duration.

The information about the valid duration in this step indicates one or more valid durations. As a quantity of neighbour cell lists of the first cell is one or more, and a quantity of second cells included in each neighbour cell list is one or more, with reference to the single list indication manner or the single neighbour cell indication manner described in S703, it can be learned that a quantity of valid durations is one or more, that is, the one or more valid durations indicated by the information about the valid duration include one or more valid durations corresponding to the one or more second cells.

S804: The EMS sends the one or more neighbour cell lists and the information about the valid duration to the base station. Correspondingly, the base station receives the one or more neighbour cell lists and the information about the valid duration.

When the EMS manages a plurality of base stations, the EMS may first determine a base station to which the first cell belongs. When the base station has a plurality of first cells, the EMS further determines one or more neighbour cell lists of each first cell, and sends the one or more neighbour cell lists of each first cell and one or more valid durations to the base station to which the first cell belongs.

S805: The NMS sends indication information to the EMS, where the indication information indicates whether to perform neighbour cell management based on the valid duration.

S806: The EMS sends the indication information to the base station. Correspondingly, the base station receives the indication information.

If the indication information indicates to perform neighbour cell management based on the valid duration, the base station performs S807.

S807: The base station performs neighbour cell management based on the valid duration corresponding to each second cell.

In this embodiment of this application, as the NMS has data of an entire network, the NMS can be used as a main control node to determine a neighbour cell management policy and determine specific configuration information used for neighbour cell management, so that neighbour cell management decision is more comprehensive and intelligent. The neighbour cell management policy includes determining a neighbour cell range in which the valid duration is used, and indicating whether to perform neighbour cell management based on the valid duration. The configuration information used for neighbour cell management includes the valid duration corresponding to each second cell.

In this embodiment of this application, the NMS controls whether to enable, on the entire network, a function of neighbour cell management that is based on the valid duration, and the NMS performs forwarding the indication information to the base station via the EMS. Based on the indication information, the base station can perform neighbour cell management more flexibly.

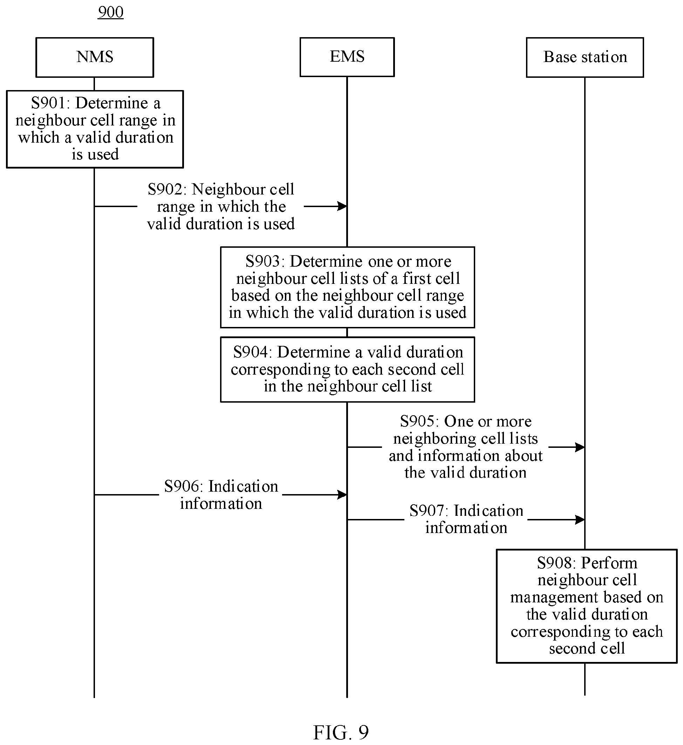

FIG. 9 is a schematic flowchart of another method 900 for neighbour cell management according to an embodiment of this application. The method 900 is described by using an example in which the foregoing first communication apparatus is the EMS and the foregoing second communication apparatus is the base station.

The method 900 includes S901 to S908, and specific steps are as follows:
S901: The NMS determines a neighbour cell range in which a valid duration is used.

In this step, the NMS first determines a first cell, and then determines, from a plurality of neighbour cells of the first cell, the neighbour cell range in which the valid duration is used. The neighbour cell range in which the valid duration is used includes one or more second cells, and the one or more second cells may be understood as candidate neighbour cells of the first cell. For a specific process of determining the first cell, refer to the foregoing descriptions of S701. Details are not described herein again.

S902: The NMS sends the neighbour cell range in which the valid duration is used to the EMS. Correspondingly, the EMS receives the neighbour cell range in which the valid duration is used.

S903: The EMS determines one or more neighbour cell lists of the first cell based on the neighbour cell range in which the valid duration is used, where each neighbour cell list includes the one or more second cells.

S904: The EMS determines a valid duration corresponding to each second cell in the neighbour cell list, where each second cell is a neighbour cell of the first cell within the corresponding valid duration.

The foregoing already describes the valid duration and a manner of determining the valid duration corresponding to each second cell. Details are not described herein again.

S905: The EMS sends the one or more neighbour cell lists and information about the valid duration to the base station. Correspondingly, the base station receives the one or more neighbour cell lists and the information about the valid duration.

The one or more neighbour cell lists are one or more neighbour cell lists of the first cell. The information about the valid duration indicates one or more valid durations, and each of the one or more valid durations may indicate a single neighbour cell list, or may indicate a single neighbour cell. For details, refer to the foregoing descriptions of S703. Details are not described herein again.

S906: The NMS sends indication information to the EMS, where the indication information indicates whether to perform neighbour cell management based on the valid duration. Correspondingly, the EMS receives the indication information.

The indication information is already described above. Details are not described herein again.

S907: The EMS sends the indication information to the base station. Correspondingly, the base station receives the indication information.

If the indication information indicates to perform neighbour cell management based on the valid duration, the base station performs S908.

S908: The base station performs neighbour cell management based on the valid duration corresponding to each second cell.

If the indication information indicates to enable a function of neighbour cell management that is based on the valid duration, the base station performs neighbour cell management based on the valid duration corresponding to each second cell. If the indication information indicates to disable the function of neighbour cell management that is based on the valid duration, one or more second cells in each neighbour cell list received by the base station are permanently valid. In other words, the one or more second cells in each neighbour cell list may always be used as neighbour cells of the first cell during a period in which the function is disabled, until the NMS or the EMS indicates to enable the function of neighbour cell management that is based on the valid duration.

In this embodiment of this application, as the NMS has data of an entire network, the NMS can determine a neighbour cell management policy, including determining the neighbour cell range in which the valid duration is used, and indicating whether to perform neighbour cell management based on the valid duration. As the EMS has more real-time and detailed understanding of the base station in a domain managed by the EMS, the EMS can determine specific configuration information used for neighbour cell management, including the valid duration corresponding to each second cell. In this way, the determined configuration information is more accurate.

In some scenarios, some neighbour cells of the first cell are cells of a base station outside a management scope of the EMS. As the EMS cannot obtain information of these neighbour cells, the EMS cannot determine valid durations corresponding to the neighbour cells. In this scenario, the NMS may generate the valid durations of the neighbour cells, and send the valid durations of the neighbour cells to the EMS.

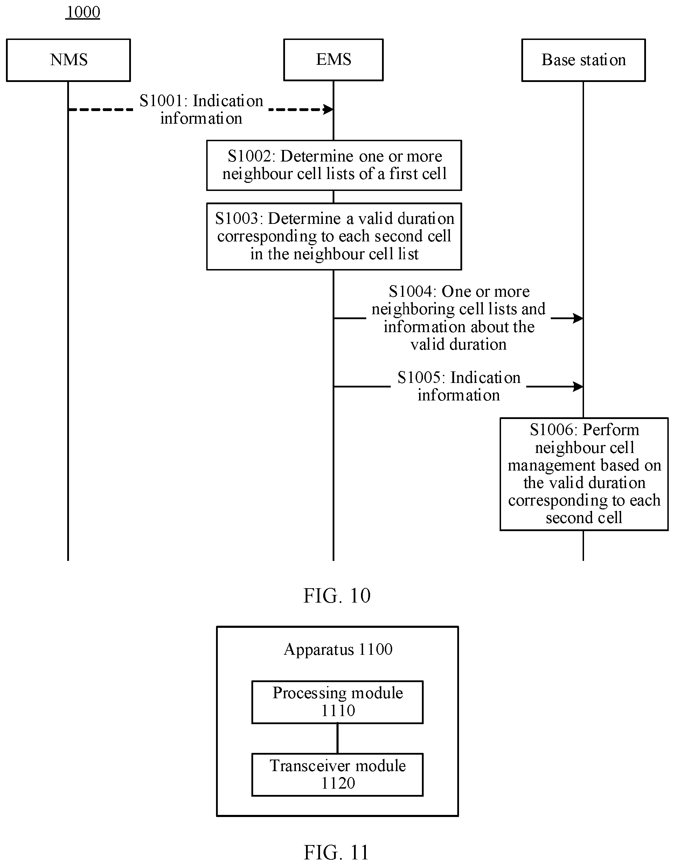

FIG. 10 is a schematic flowchart of still another method 1000 for neighbour cell management according to an embodiment of this application. The method 1000 is described by using an example in which the foregoing first communication apparatus is the EMS and the foregoing second communication apparatus is the base station.

The method 1000 includes S1001 to S1006, and specific steps are as follows:
S1001: The NMS sends indication information to the EMS, where the indication information indicates whether to perform neighbour cell management based on a valid duration. Correspondingly, the EMS receives the indication information.

S1002: The EMS determines one or more neighbour cell lists of a first cell.

Each of the one or more neighbour cell lists includes one or more second cells, and the one or more second cells may be considered as candidate neighbour cells of the first cell.

Before determining the one or more neighbour cell lists of the first cell, the EMS may first determine a neighbour cell range in which the valid duration is used. The neighbour cell range in which the valid duration is used includes the one or more second cells, and the EMS determines the one or more neighbour cell lists based on the neighbour cell range in which the valid duration is used.

S1003: The EMS determines a valid duration corresponding to each second cell in the neighbour cell list. Each second cell is a neighbour cell of the first cell within the corresponding valid duration.

S1004: The EMS sends the one or more neighbour cell lists and information about the valid duration to the base station. Correspondingly, the base station receives the one or more neighbour cell lists and the information about the valid duration.

S1005: The EMS sends the indication information to the base station. Correspondingly, the base station receives the indication information.

If the indication information indicates to perform neighbour cell management based on the valid duration, the base station performs S1006.

S1006: The base station performs neighbour cell management based on the valid duration corresponding to each second cell.

In this embodiment of this application, as the EMS has more real-time and detailed understanding of the base station in a domain managed by the EMS, the EMS can determine a neighbour cell management policy and specific configuration information used for neighbour cell management. This helps reduce a delay for transmission of the configuration information used for neighbour cell management, and helps improve accuracy of neighbour cell management decision. The neighbour cell management policy includes determining the neighbour cell range in which the valid duration is used. Specifically, the configuration information used for neighbour cell management includes the valid duration corresponding to each second cell.

It should be noted that, in the foregoing method 1000, that the NMS sends the indication information to the EMS is an optional step, that is, the NMS may not send the indication information to the EMS, but the EMS determines whether the base station needs to enable neighbour cell management that is based on the valid duration, and the EMS sends the indication information to the base station.

It should be understood that sequence numbers of the foregoing processes do not mean execution sequences. The execution sequence of the processes should be determined based on functions and internal logic of the processes, and should not be construed as any limitation on implementation processes of embodiments of this application.

The foregoing describes in detail the methods for neighbour cell management according to embodiments of this application with reference to FIG. 7 to FIG. 10. The following describes in detail communication apparatuses according to embodiments of this application with reference to FIG. 11 to FIG. 13.

FIG. 11 is a block diagram of a communication apparatus 1100 according to an embodiment of this application. The apparatus 1100 includes a processing module 1110 and a transceiver module 1120.

The processing module 1110 is configured to: determine a neighbour cell list of a first cell, where the neighbour cell list includes one or more second cells; and determine a valid duration corresponding to each second cell in the neighbour cell list, where each second cell is a neighbour cell of the first cell within the corresponding valid duration. The transceiver module 1120 is configured to send neighbour cell information, where the neighbour cell information indicates each second cell in the neighbour cell list of the first cell and the valid duration corresponding to each second cell.

Optionally, the neighbour cell information indicates one valid duration, and the valid duration corresponds to the one or more second cells.

Optionally, the neighbour cell information indicates one or more valid durations, and the one or more valid durations are in one-to-one correspondence with the one or more second cells.

Optionally, the processing module 1110 is configured to determine, based on one or more of the following information, the valid duration corresponding to each second cell in the neighbour cell list: ephemeris information, digital twin information, artificial intelligence, or a large-scale model.

Optionally, the transceiver module 1120 is configured to send indication information, where the indication information indicates whether to perform neighbour cell management based on the valid duration.

In an optional example, a person skilled in the art may understand that the apparatus 1100 may be specifically the first communication apparatus (for example, an NMS or an EMS) in the foregoing embodiments, or a function of the first communication apparatus (for example, an NMS or an EMS) in the foregoing embodiments may be integrated into the apparatus 1100. The foregoing functions may be implemented by hardware, or may be implemented by hardware executing corresponding software. The hardware or the software includes one or more modules corresponding to the foregoing functions. For example, the foregoing transceiver module 1120 may be a communication interface, for example, a transceiver interface. The apparatus 1100 may be configured to perform procedures and/or steps corresponding to the first communication apparatus (for example, the NMS or the EMS) in the foregoing method embodiments.

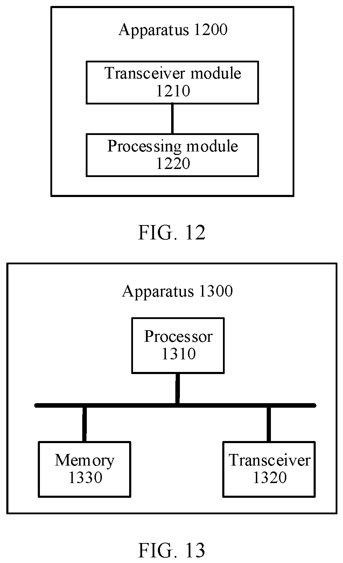

FIG. 12 is a block diagram of a communication apparatus 1200 according to an embodiment of this application. The apparatus 1200 includes a transceiver module 1210 and a processing module 1220.

The transceiver module 1210 is configured to receive neighbour cell information, where the neighbour cell information indicates each second cell in a neighbour cell list of a first cell and a valid duration corresponding to each second cell, and each second cell is a neighbour cell of the first cell within the corresponding valid duration. The processing module 1220 is configured to perform neighbour cell management based on the valid duration corresponding to each second cell.

Optionally, the neighbour cell information indicates one valid duration, and the valid duration corresponds to one or more second cells.

Optionally, the neighbour cell information indicates one or more valid durations, and the one or more valid durations are in one-to-one correspondence with the one or more second cells.

Optionally, the transceiver module 1210 is configured to receive indication information, where the indication information indicates whether to perform neighbour cell management based on the valid duration. The processing module 1220 is configured to: in a case in which the indication information indicates to perform neighbour cell management based on the valid duration, perform neighbour cell management based on the valid duration corresponding to each second cell.

In an optional example, a person skilled in the art may understand that the apparatus 1200 may be specifically the second communication apparatus (for example, a base station) in the foregoing embodiments, or a function of the first communication apparatus (for example, a base station) in the foregoing embodiments may be integrated into the apparatus 1200. The foregoing functions may be implemented by hardware, or may be implemented by hardware executing corresponding software. The hardware or the software includes one or more modules corresponding to the foregoing functions. For example, the foregoing transceiver module 1210 may be a communication interface, for example, a transceiver interface. The apparatus 1200 may be configured to perform procedures and/or steps corresponding to the second communication apparatus (for example, the base station) in the foregoing method embodiments.

It should be understood that the apparatus 1100 and the apparatus 1200 herein are embodied in a form of functional modules. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function.

In embodiments of this application, the apparatus 1100 and the apparatus 1200 may alternatively be a chip or a chip system, for example, a system on chip (system on chip, SoC). Correspondingly, the transceiver module may be a transceiver circuit of the chip. This is not limited herein.

FIG. 13 is a block diagram of another communication apparatus 1300 according to an embodiment of this application. The apparatus 1300 includes a processor 1310, a transceiver 1320, and a memory 1330. The processor 1310, the transceiver 1320, and the memory 1330 communicate with each other through an internal connection path. The memory 1330 is configured to store instructions, and the processor 1310 is configured to execute the instructions stored in the memory 1330, to control the transceiver 1320 to send a signal and/or receive a signal.

It should be understood that the apparatus 1300 may be specifically the NMS, the EMS, or the base station in the foregoing embodiments, or functions of the NMS, the EMS, or the base station in the foregoing embodiments may be integrated into the apparatus 1300. The apparatus 1300 may be configured to perform steps and/or procedures corresponding to the NMS, the EMS, or the base station in the foregoing method embodiments. Optionally, the memory 1330 may include a read-only memory and a random access memory, and provides instructions and data for the processor. A part of the memory may further include a non-volatile random access memory. For example, the memory may further store information about a device type. The processor 1310 may be configured to execute the instructions stored in the memory. When the processor executes the instructions, the processor 1310 can perform steps and/or procedures corresponding to the NMS, the EMS, or the base station in the foregoing method embodiments.

It should be understood that, in embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, discrete gate or transistor logic device, discrete hardware component, or the like. The general-purpose processor may be a microprocessor, or the processor may be any conventional processor or the like.

An embodiment of this application further provides a computer-readable storage medium. The computer-readable storage medium stores a computer program (which may also be referred to as code or instructions). When the computer program is executed by a computer, the computer is caused to perform the method performed by the first communication apparatus or the second communication apparatus in the foregoing method embodiments.

An embodiment of this application further provides a computer program product including a computer program or instructions. When the computer program or the instructions are executed by a computer, the computer is caused to implement the method performed by the first communication apparatus or the second communication apparatus in the foregoing method embodiments.

An embodiment of this application further provides a communication system. The communication system includes the first communication apparatus and the second communication apparatus in the foregoing embodiments. The first communication apparatus is configured to perform some or all operations performed by the first communication apparatus in the foregoing method embodiments, and the second communication apparatus is configured to perform some or all operations of the second communication apparatus in the foregoing method embodiments.

An embodiment of this application further provides a chip apparatus. The chip apparatus includes a processor configured to invoke a computer program or instructions stored in a memory, to cause the processor to perform the method provided in the foregoing embodiments.

In a possible implementation, an input of the chip apparatus corresponds to a receiving operation in any embodiment of the foregoing embodiments, and an output of the chip apparatus corresponds to a sending operation in any embodiment of the foregoing embodiments.

Optionally, the processor is coupled to the storage through an interface.

Optionally, the chip apparatus further includes the memory. The memory stores the computer program or the instructions.

In an implementation process, steps in the foregoing methods can be performed by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads the instructions in the memory and completes the steps in the foregoing methods in combination with hardware of the processor. To avoid repetition, details are not described herein again.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the foregoing described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, that is, may be located in one position, or may be distributed on a plurality of network modules. Some or all the modules may be selected according to actual needs to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for neighbour cell management, comprising:
determining a neighbour cell list of a first cell, wherein the neighbour cell list comprises one or more second cells;
determining a valid duration corresponding to each second cell in the neighbour cell list, wherein each second cell is a neighbour cell of the first cell within the corresponding valid duration; and
sending neighbour cell information, wherein the neighbour cell information indicates each second cell in the neighbour cell list of the first cell and the valid duration corresponding to each second cell.

2. The method according to claim 1, wherein the first cell is a non-terrestrial network NTN cell.

3. The method according to claim 1 or 2, wherein the neighbour cell information indicates one valid duration, and the valid duration corresponds to the one or more second cells.

4. The method according to claim 1 or 2, wherein the neighbour cell information indicates one or more valid durations, and the one or more valid durations are valid durations corresponding to the one or more second cells.

5. The method according to any one of claims 1 to 4, wherein the determining the valid duration corresponding to each second cell in the neighbour cell list comprises:
determining, based on one or more of the following information, the valid duration corresponding to each second cell in the neighbour cell list:
ephemeris information, digital twin information, artificial intelligence, or a large-scale model.

6. The method according to any one of claims 1 to 5, wherein the method further comprises:
sending indication information, wherein the indication information indicates whether to perform neighbour cell management based on the valid duration.

7. A method for neighbour cell management, comprising:
receiving neighbour cell information, wherein the neighbour cell information indicates each second cell in a neighbour cell list of a first cell and a valid duration corresponding to each second cell, and each second cell is a neighbour cell of the first cell within the corresponding valid duration; and
performing neighbour cell management based on the valid duration corresponding to each second cell.

8. The method according to claim 7, wherein the first cell is a non-terrestrial network NTN cell.

9. The method according to claim 7 or 8, wherein the neighbour cell information indicates one valid duration, and the valid duration corresponds to the one or more second cells.

10. The method according to claim 7 or 8, wherein the neighbour cell information indicates one or more valid durations, and the one or more valid durations are valid durations corresponding to the one or more second cells.

11. The method according to any one of claims 7 to 10, wherein before the performing neighbour cell management based on the valid duration corresponding to each second cell, the method further comprises:
receiving indication information, wherein the indication information indicates whether to perform neighbour cell management based on the valid duration; and
the performing neighbour cell management based on the valid duration corresponding to each second cell comprises:
in a case in which the indication information indicates to perform neighbour cell management based on the valid duration, performing neighbour cell management based on the valid duration corresponding to each second cell.

12. A communication apparatus, comprising a module configured to perform the method according to any one of claims 1 to 6, or a module configured to perform the method according to any one of claims 7 to 11.

13. A communication apparatus, comprising a processor, wherein the processor is coupled to a memory, the memory is configured to store a program or instructions, and when the program or the instructions are executed by the processor, the method according to any one of claims 1 to 6 is performed, or the method according to any one of claims 7 to 11 is performed.

14. A computer-readable storage medium, configured to store a computer program, wherein when the computer program is executed by a computer, the method according to any one of claims 1 to 6 is performed, or the method according to any one of claims 7 to 11 is performed.

15. A computer program product, comprising a computer program or instructions, wherein when the computer program or the instructions are run, the method according to any one of claims 1 to 6 is performed, or the method according to any one of claims 7 to 11 is performed.

16. A communication system, comprising a first communication apparatus and a second communication apparatus, wherein
the first communication apparatus is configured to perform the method according to any one of claims 1 to 6; and
the second communication apparatus is configured to receive neighbour cell information.

17. A method for neighbour cell management, comprising:
determining, by a first communication apparatus, a neighbour cell list of a first cell, wherein the neighbour cell list comprises one or more second cells;
determining, by the first communication apparatus, a valid duration corresponding to each second cell in the neighbour cell list, wherein each second cell is a neighbour cell of the first cell within the corresponding valid duration;
sending, by the first communication apparatus, neighbour cell information, wherein the neighbour cell information indicates each second cell in the neighbour cell list of the first cell and the valid duration corresponding to each second cell; and
receiving, by a second communication apparatus, the neighbour cell information.
